# EUROPÄISCHE PATENTSCHRIFT

(11) **EP 2 337 720 B1**
(45) Veröffentlichungstag und Bekanntmachung des Hinweises auf die Patenterteilung: **06.06.2012**
(21) Anmeldenummer: 09778415.1
(22) Anmeldetag: 09.09.2009
(51) Int. Cl.: B60T 17/08

(54) **KOMBINIERTER BETRIEBSBREMS- UND FEDERSPEICHERBREMSZYLINDER MIT AUS EINEM FÜHRUNGSRING UND WENIGSTENS EINEM DICHTUNGSELEMENT BESTEHENDEN DICHTUNGSANORDNUNGEN**
COMBINED SERVICE BRAKE- AND SPRING BRAKE CYLINDER COMPRISING SEALING ASSEMBLIES CONSISTING OF A GUIDE RING AND AT LEAST ONE SEALING ELEMENT
CYLINDRE COMBINÉ DE FREIN DE SERVICE ET DE FREIN À RESSORT COMPRENANT DES SYSTÈMES D'ÉTANCHÉITÉ CONSTITUÉS D'UNE BAGUE DE GUIDAGE ET D'AU MOINS UN ÉLÉMENT D'ÉTANCHÉITÉ

(30) Priorität: 17.09.2008 DE 102008047633
(43) Veröffentlichungstag der Anmeldung: 29.06.2011
(73) Patentinhaber: Knorr-Bremse Systeme für Nutzfahrzeuge GmbH, 80809 München (DE)
(72) Erfinder: FANTAZI, Alain, F-14160 Dives sur mer (FR); LANQUETOT, Jacques, F-14360 Trouville/Mer (FR); HEMERY, Franck, F-14600 Honfleur (FR)
(74) Vertreter: Mattusch, Gundula
(86) Internationale Anmeldenummer: PCT/EP2009/006526
(87) Internationale Veröffentlichungsnummer: WO 2010/031512

(56) Entgegenhaltungen:
- EP-A1- 0 486 824
- EP-A1- 0 692 651
- EP-A1- 0 740 085
- WO-A1-03/080417
- WO-A1-03/080418
- DE-A1- 4 011 739

## Beschreibung

### Stand der Technik

Die Erfindung geht aus einem kombinierten Betriebsbrems- und Federspeicherbremszylinder für Bremsanlagen von Fahrzeugen, mit einem im Gehäuse des Betriebsbremszylinders angeordneten Betriebsbremskolben sowie mit einem im Gehäuse des Federspeicherbremszylinders angeordneten, durch wenigstens eine Speicherfeder betätigbaren Federspeicherbremskolben mit einer Federspeicherbremskolbenstange, welche durch eine zentrale Bohrung einer Zwischenwand zwischen dem Betriebsbremszylinder und dem Federspeicherbremszylinder derart ragt, dass sie auf den Betriebsbremskolben wirkt, wobei in der zentralen Bohrung der Zwischenwand eine erste Dichtungsanordnung aufgenommen ist, welche das Innere des Betriebsbremszylinders gegenüber dem Inneren des Federspeicherbremszylinders abdichtet und wobei der Federspeicherbremskolben an seiner radial äußeren Umfangsfläche eine weitere Dichtungsanordnung trägt, zur Abdichtung einer die Speicherfeder beinhaltenden Federkammer von einer be- und entlüftbaren Federspeicherbremskammer des Federspeicherbremszylinders, gemäß dem Oberbegriff von Anspruch 1.

Aus der EP 0 692 651 A1 ist eine Anordnung zur Betätigung von Scheibenbremsen für Nutzfahrzeuge bekannt. In einem an das Gehäuse der Scheibenbremse angeflanschten Betriebsbremszylinder ist eine Dichtungseinrichtung vorgesehen, welche das Innere des mit Außenluft in Verbindung stehenden Betätigungszylinders gegenüber dem Inneren der angeschlossenen Scheibenbremsanlage abdichtet. Der mit einem Membranteller verbundenes Druckstück des Betriebsbremszylinders ist durch eine Balgdichtung umschlossen. Ein Ende der als Faltenbalg oder Rollbalg ausgebildeten Balgdichtung umfasst als Dichtwulst das Druckstück und ist in einer Nut desselben geführt, während das entgegengesetzte Ende der Balgdichtung in einer das Druckstück bzw. den Stößel umgebenden Weise am Deckel des Betriebsbremszylinders aufgeknüpft ist. Die Balgdichtung dient gleichzeitig als Federzentrierung für die Rückstellfeder des Betriebsbremszylinders, wobei die Rückstellfeder an der Innenseite des Deckels an einer Außenschulter der Balgdichtung anliegt.

Eine gattungsgemäßer kombinierter Betriebsbrems- und Federspeicherbremszylinder ist beispielsweise aus der DE 40 11 739 A1 bekannt. Dort ist die Federspeicherbremskolbenstange über einen nicht näher bezeichneten, in die zentrale Bohrung der Zwischenwand eingesetzten Dichtungsring abgedichtet. Weiterhin ist auch der Federspeicherbremskolben mittels eines an seinem äußeren Umfang angeordneten Dichtungsrings gegenüber einer radial inneren Wandung des Federspeicherbremszylinders abgedichtet.

Bei solchen kombinierten Betriebsbrems- und Federspeicherbremszylindern betätigt der Federspeicherbremskolben im Parkbremsfall mit seiner Federspeicherbremskolbenstange den Betriebsbremskolben, welcher wiederum eine Betriebsbremskolbenstange aufweist, welche mit einem Bremsmechanismus der Fahrzeugbremse, insbesondere einer Scheibenbremse zusammen wirkt. Ein solcher Bremsmechanismus ist beispielsweise in der EP 0 740 085 B1 beschrieben und weist einen mit der Betriebsbremskolbenstange gelenkig verbundenen Schwenkhebel auf, welcher mit einer Zuspannwelle drehfest verbunden ist, die mit einer Nockenkontur versehen ist, die bei einem Verdrehen der Zuspannwelle um ihre Längsachse zu einer axialen Relativbewegung eines Bremssattels und einer Bremsbacke einer Scheibenbremse führt.

Da sich der mit der Betriebsbremskolbenstange gelenkig verbundene Schwenkhebel während dieser Bewegung um die Zuspannwelle dreht, wird auf die Betriebsbremskolbenstange und damit auf den Betriebsbremskolben ein Kippmoment um eine Achse senkrecht zur Längsachse ausgeübt. Weil sich im Parkbremsfall die relativ große Stirnfläche der Federspeicherbremskolbenstange am Betriebsbremskolben flächig abstützt, wird dieses Kippmoment daher auch zumindest teilweise auf die Federspeicherbremskolbenstange und auf den Federspeicherbremskolben übertragen. Da die Federspeicherbremskolbenstange durch die eine Dichtungsanordnung in der zentralen Bohrung der Zwischenwand und der Federspeicherbremskolben durch die weitere Dichtungsanordnung gegenüber dem Federspeicherbremszylinder geführt ist, wirkt dieses Kippmoment zumindest teilweise auch auf die Dichtungsanordnungen, was auf Dauer zu einer Beschädigung der Dichtungsanordnungen und damit zu einem Nachlassen der Dichtwirkung führen kann.

Der vorliegenden Erfindung liegt demgegenüber die Aufgabe zugrunde, einen kombinierten Betriebsbrems- und Federspeicherbremszylinder der eingangs erwähnten Art derart weiter zu entwickeln, dass die genannten Dichtungsanordnungen eine höhere Lebensdauer aufweisen.

Diese Aufgabe wird erfindungsgemäß durch die Merkmale von Anspruch 1 gelöst.

### Offenbarung der Erfindung

Die Erfindung sieht vor, dass wenigstens eine der Dichtungsanordnungen einen die Federspeicherbremskolbenstange in der Bohrung der Zwischenwand oder den Federspeicherbremskolben im Federspeicherbremszylinder führenden Führungsring aus einem gegenüber dem Material wenigstens eines Dichtungselements steiferen Material beinhaltet, wobei das Dichtungselement aus einem mit dem Führungsring durch Urformen wie Spritzgießen oder Spritzpressen verbundenen Elastomer besteht.

Dann kann das Material des Führungsrings so steif gewählt werden, dass er das auf die Federspeicherbremskolbenstange bzw. auf den Federspeicherbremskolben wirkende Kippmoment dauerhaft ohne Schaden abstützen und in die Zwischenwand bzw. in den Federspeicherbremszylinder ableiten kann, während das Material des wenigstens einen Dichtungselements so elastisch gewählt werden kann, dass es günstige Dichtungseigenschaften aufweist und insbesondere im wesentlichen keine Führungsfunktion ausüben muss. Dann können die Toleranzen zwischen dem Führungsring und der radial inneren Wandung der zentralen Bohrung der Zwischenwand bzw. der radial inneren Wandung des Federspeicherbremskolbens relativ groß gewählt werden, da der Führungsring im wesentlichen keine Dichtungsfunktion zu erfüllen hat, was sich günstig auf die Fertigungskosten auswirkt.

Zum andern steigt auch die Haltbarkeit der Dichtungsanordnung, weit das wenigstens eine, die Dichtungsfunktion übernehmende Dichtungselement so elastisch ausgeführt werden kann, dass sich das Kippmoment nicht mehr negativ auf seine Lebensdauer auswirkt.

Günstig für die Lebensdauer der Dichtungsanordnungen ist auch, dass das Dichtungselement mit dem Führungsring einen einstückigen Körper bildet, bei weichem die Verbindungskräfte durch Urformen, d.h. durch eine direkte Formgebung aus einer Formmasse oder einem flüssigen Vorprodukt dadurch entstanden sind, dass der Führungsring als Fertigteil in ein Werkzeug eingelegt wird, in welches dann der Elastomerwerkstoff beispielsweise unter Druck- und Wärmeeinwirkung (Vulkanisation) eingebracht wird. Denn eine solche durch Urformen hergestellte Verbindung ist in der Regel sehr dauerhaft.

Durch die in den Unteransprüchen aufgeführten Maßnahmen sind vorteilhafte Weiterbildungen und Verbesserungen der in den unabhängigen Ansprüchen angegebenen Erfindung möglich.

Insbesondere besteht der Führungsring aus einem Kunststoff wie Acetal.

Besonders bevorzugt weist der Führungsring wenigstens eine Ausnehmung mit hinterschnittenem Querschnitt auf, welche das wenigstens eine Dichtungselement in hintergreifender Weise durchragt. Der hinterschnittene Querschnitt sorgt neben der aus dem Urformprozess hervorgegangenen stoffschlüssigen Verbindung zwischen dem Führungsring und dem Dichtungselement für eine zusätzliche formschlüssige Verbindung, was diese noch fester und dauerhafter macht.

Gemäß einer Weiterbildung kann vorgesehen sein, dass der wenigstens eine Dichtungsabschnitt des Dichtungselements an seinem vom Führungsring weg weisenden Ende einen schwalbenschwanzförmigen Querschnitt mit zwei Schenkeln aufweist, wobei der eine Schenkel gegen die radial innere Wandung der zentralen Bohrung der Zwischenwand oder gegen den Federspeicherbremszylinder und der andere Schenkel gegen die Federspeicherbremskolbenstange oder gegen den Federspeicherbremskolben dichtet. Damit ergibt sich eine sehr elastische, an die Oberfläche des Gleitpartners leicht anpassbare Dichtung.

Wenn das wenigstens eine Dichtungselement bezüglich des Führungsrings symmetrisch ausgebildet ist und zwei jeweils axial über den Führungsring hinaus ragende Dichtungsabschnitte aufweist, sind zwei, in Bewegungsrichtung hintereinander oder seriell geschaltete Dichtflächen vorhanden, was die Dichtwirkung vorteilhaft erhöht.

Eine solche Dichtgeometrie kann im Rahmen des Urformverfahrens auf einfache Weise hergestellt werden, indem die der Führungsring mehrere axiale, insbesondere am Umfang verteilte Durchgangsausnehmungen aufweist, welche dann beim Urformen von der Elastomermasse beidseitig durchsetzt werden, wodurch sich gleichzeitig eine formschlüssige Verbindung zwischen dem Führungsring und dem Dichtungselement ergibt, wenn die beiden aus dem Führungsring axial heraus ragenden Dichtungsabschnitte größeren Außenmaße als die Innenmaße der Ausnehmungen aufweisen und sich dadurch hinterschnittene Querschnitte ausbilden.

Besonders bevorzugt ist der Führungsring in radialer Richtung derart elastisch ausgebildet, dass wenigstens ein radial vorstehender Vorsprung des Führungsrings mit einer Ausnehmung in der radial inneren Wandung der zentralen Bohrung der Zwischenwand verrastbar ist. Dann ergibt sich eine einfache Montage des das Dichtungselement tragenden Führungsrings in der Bohrung.

Nicht zuletzt kann zwischen dem Führungsring und dem wenigstens einen Dichtungselement wenigstens eine Kavität ausgebildet sein, zur Aufnahme von Schmierstoff.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines kombinierten Betriebsbrems- und Federspeicherbremszylinders mit einer Dichtungsanordnung gemäß einer bevorzugten Ausführungsform der Erfindung;
- Fig.2: eine vergrößerte Darstellung einer ersten Dichtungsanordnung von Fig.1;
- Fig.3: eine vergrößerte Darstellung einer weiteren Dichtungsanordnung von Fig.1.

### Beschreibung des Ausführungsbeispiels

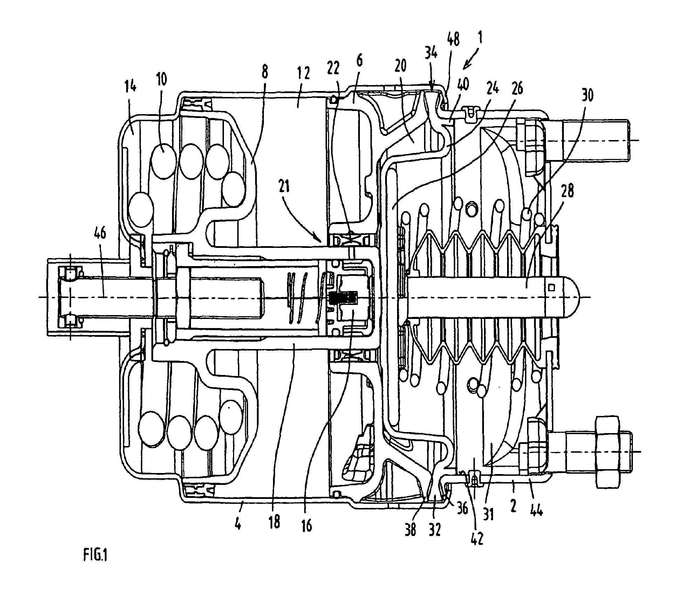

In Fig.1 ist ein kombinierter Betriebsbrems- und Federspeicherbremszylinder 1, nachfolgend Kombizylinder genannt, dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Federspeicherbremskolbenstange 18 verbunden, welche sich durch die Zwischenwand 6 in eine Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Weiterhin ist an der Membrane 24 wenigstens ein sich in axialer Richtung erstreckender, in Bezug zum Befestigungsrand 32 nach radial innen versetzt angeordneter Zentrierring 40 ausgebildet, durch welchen sie gegen eine radial innere Umfangsfläche 42 einer Wandung 44 des Betriebsbremszylinders 2 zentrierbar ist. Besonders bevorzugt ist der Zentrierring 40 im wesentlichen senkrecht zu einer Mittelebene des Befestigungsrandes 32 angeordnet und ragt beispielsweise einseitig von der Membrane 24 weg. Denkbar ist allerdings auch, dass anstatt dieses einen Zentrierrings 40 oder zusätzlich ein weiterer, in Richtung des Federspeicherbremszylinders 4 ragender und gegen die radial innere Umfangsfläche dessen Wandung zentrierender Zentrierring vorgesehen ist.

Nicht zuletzt liegt die radial innere Umfangsfläche 42 des Betriebsbremszylinders 2, gegen welche der Zentrierring 40 zentriert, bevorzugt auf einem gedachten Zylinder, dessen Mittelachse koaxial zur Zylinderachse 46 ist. Der Zentrierring 40 kann wie gezeigt in Umfangsrichtung gesehen vollständig umlaufend oder aus Ringabschnitten bestehend ausgebildet sein. Die Membrane 24 ist bevorzugt aus Gummi gefertigt und der Zentrierring 40 mit ihr einstückig ausgebildet.

Dann sorgt eine eine axiale Komponente aufweisende Klemmkraft der gegeneinander geklemmten Zwischenwand 6 und Betriebsbremszylinder 2 dafür, dass der Zentrierring 40 der Membrane 24 gegen die radial innere Umfangsfläche 42 der Wandung 44 des Betriebsbremszylinders 2 gepresst wird. Mit anderen Worten sorgt die axiale Komponente der Klemmkraft dafür, dass der Befestigungsrand 32 aufgrund der Keilwirkung nach radial außen gezogen und dadurch der Zentrierring 40 mit höherer radialer Kraft gegen die radial innere Umfangsfläche 42 der Wandung 44 des Betriebsbremszylinders 2 im Sinne einer Selbstverstärkung der Zentrierung gepresst wird.

Realisierbar ist eine solche axiale Klemmkraftkomponente beispielsweise dadurch, dass der einen Flansch 36 ausbildende Rand des Betriebsbremszylinders 2 sowie der Flansch 38 der Zwischenwand 6 von einem Rand 48 der Wandung des Federspeicherbremszylinders 4 nach Art einer Bördelung übergriffen werden, welche beispielsweise durch einen Umformprozess hergestellt wird. Diese Bördelung sorgt dann für die axiale Komponente der Klemmkraft.

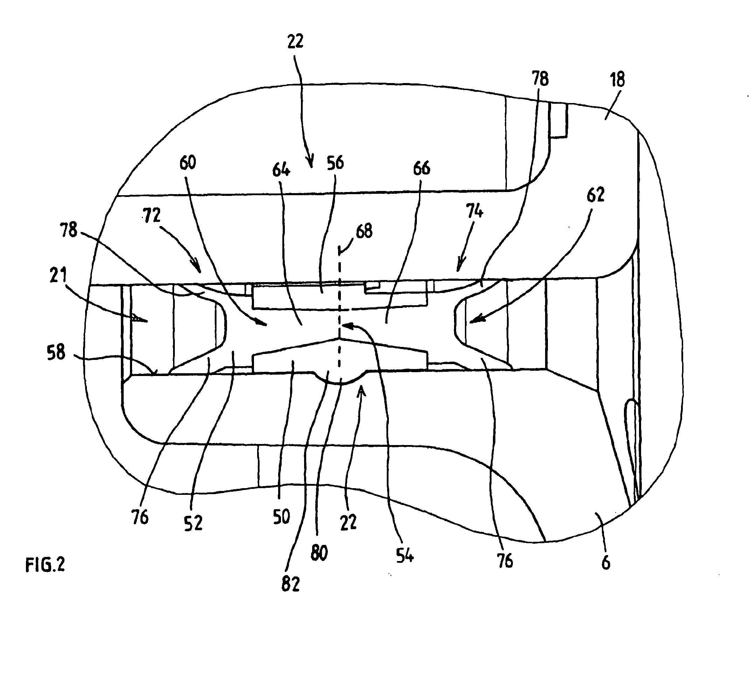

Die Dichtungsanordnung 22 gemäß Fig.2 beinhaltet einen Führungsring 50 aus einem gegenüber dem Material wenigstens eines Dichtungselements 52 54, steiferen Material, wobei die Federspeicherbremskolbenstange 18 entlang eines zylindrischen Führungsabschnitts 56 des Führungsrings 50 geführt ist, welcher das wenigstens eine, gegen die Federspeicherbremskolbenstange 18 und eine radial innere Wandung 58 der zentralen Bohrung 21 der Zwischenwand 6 dichtende Dichtungselement 52, 54 trägt. Die axiale Erstreckung des Führungsabschnitts 56 entspricht im vorliegenden Fall der des Führungsrings 50. Insbesondere besteht der Führungsring 50 aus einem steifen Kunststoff wie Acetal und trägt ein Dichtungselement 52 aus einem demgegenüber elastischeren Elastomer. Die Federspeicherbremskolbenstange 18, der Federspeicherbremskolben 8 und die Zwischenwand 6 bestehen bevorzugt aus Aluminium.

Das Dichtungselement 52 ist mit dem Führungsring 50 durch einen Urformprozess wie Spritzgießen oder Spritzpressen verbunden, d.h. durch eine direkte Formgebung aus einer Formmasse oder einem flüssigen Vorprodukt dadurch, dass der Führungsring als Fertigteil in ein Werkzeug eingelegt wird, in welches dann der Elastomerwerkstoff beispielsweise unter Druck- und Wärmeeinwirkung (Vulkanisation) eingebracht wird.

Besonders bevorzugt weist der Führungsring 50 zwei stirnseitige, ringförmige und sich axial erstreckende, bezüglich einer senkrecht zur Axial- oder Bewegungsrichtung der Federspeicherbremskolbenstange 18 angeordneten Mittelebene 68 des Führungsrings 50 symmetrische Ausnehmungen 60, 62 auf, wobei am Umfang mehrere, die beiden Ausnehmungen 60, 62 verbindende Durchbrüche 54 vorhanden sind, welche beim Urformprozess von dem Elastomerwerkstoff vor der Vernetzung durchsetzt oder durchflossen werden werden. Von diesen Durchbrüchen ist in Fig.2 ein Durchbruch 54 im Schnitt exemplarisch gezeigt. Das Dichtungselement 52 ist dann in den Ausnehmungen 60, 62 über bezüglich der Mittelebene 68 des Führungsrings 50 symmetrische Halteabschnitte 64, 66 gehalten, welche über den Durchbruch 54 miteinander verbunden sind.

Nicht nur die Halteabschnitte 64, 66, sondern das Dichtungselement 52 wie auch die gesamte Dichtungsanordnung 22 ist bezüglich der Mittelebene 68 des Führungsrings 50 symmetrisch. Aus den stirnseitigen Ausnehmungen 60, 62 des Führungsrings 50 ragen insbesondere Dichtungsabschnitte 72, 74 axial heraus, die an ihren vom Führungsring 50 weg weisenden Enden je einen schwalbenschwanzförmigen Querschnitt mit zwei Schenkeln 76, 78 aufweisen, wobei der jeweils eine Schenkel 76 gegen die radial innere Wandung 58 der zentralen Bohrung 21 der Zwischenwand 6 und der jeweils andere Schenkel 78 gegen die Federspeicherbremskolbenstange 18 dichtet.

Besonders bevorzugt ist der Führungsring 50 in radialer Richtung derart elastisch ausgebildet, dass wenigstens ein radial vorstehender Vorsprung 80 des Führungsrings 50 mit einer Ausnehmung 82 in der radial inneren Wandung 58 der zentralen Bohrung 21 der Zwischenwand 6 verrastbar ist. Zur Montage wird daher der Führungsring 50 mit den bereits montierten Dichtungselementen 52, 54 in die zentrale Bohrung 21 eingeführt, wobei er sich aufgrund seiner Elastizität ein Stück weit radial komprimieren lässt, bis der Vorsprung 80 in die Ausnehmung 82 in der radial inneren Wandung 58 der Bohrung 21 einrastet und sich der Führungsring 50 radial elastisch aufweitet, um die Rastverbindung zu sichern.

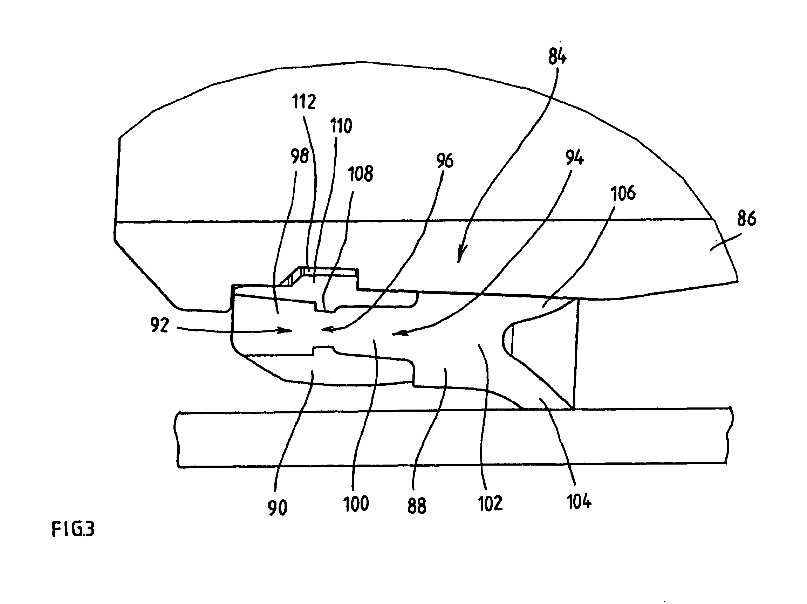

Die Dichtungsanordnung 84 gemäß Fig.3 ist an der radial äußeren Umfangsfläche eines Federtopfes 86 des Federspeicherbremskolbens 8 angeordnet und zur Abdichtung der die Speicherfeder 10 beinhaltenden Federkammer 14 von der be- und entlüftbaren Federspeicherbremskammer 12 des Federspeicherbremszylinders 4 vorgesehen. Diese Dichtungsanordnung 84 wird folglich zusammen mit dem Federspeicherbremskolben 8 entlang der radial inneren Wandung des Federspeicherbremszylinders 4 linear bewegt.

Wie bei der vorangehend beschriebenen Dichtungsanordnung 22 ist das Dichtungselement 88 der Dichtungsanordnung 84 mit dem Führungsring 90 mittels eines Urformprozesses verbunden bzw. zu einem einstückigen Bauteil geformt. Wie zuvor weist auch hier der Führungsring 90 zwei axiale Ausnehmungen 92, 94 auf, welche über mehrere am Umfang verteilt angeordnete Durchbrüche 96 von Halteabschnitten 98, 100 des Dichtungselements 88 diesseits und jenseits der Durchbrüche 96 durchsetzt sind.

Im Unterschied zu dem zuletzt beschriebenen Ausführungsbeispiel ragt jedoch nur ein Dichtungsabschnitt 102 aus dem Führungsring 90 axial heraus, welcher an seinem vom Führungsring 90 weg weisenden Ende einen schwalbenschwanzförmigen Querschnitt mit zwei Schenkeln 104, 106 aufweist, wobei der eine Schenkel 104 gegen die radial innere Wandung des Federspeicherbremszylinders 4 und der andere Schenkel 106 gegen die radial äußere Umfangsfläche des Federtopfes 86 des Federspeicherbremskolbens 8 dichtet. Eine radial innere Schulter 108 im Bereich des Durchbruchs 96 im Führungsring 90 sorgt für einen hinterschnittenen Querschnitt und eine formschlüssige Verbindung zwischen dem Dichtungselement 88 und dem Führungsring 90. Weiterhin weisen die Halteabschnitte 98, 100 jeweils kegelige Querschnitte auf, was ebenfalls einen Formschluss zwischen dem Dichtungselement 88 und dem Führungsring 90 erzeugt.

Wie beim vorangehenden Ausführungsbeispiel ist wenigstens ein radial vorstehender Vorsprung 110 des Führungsrings 90 mit einer Ausnehmung 112 in der radial äußeren Umfangsfläche des Federtopfes 86 des Federspeicherbremskolbens 8 verrastbar.

Nicht zuletzt kann zwischen dem Führungsring und dem Dichtungselement 52, wenigstens eine hier nicht gezeigte Kavität ausgebildet sein, zur Aufnahme von Schmierstoff, welcher den Gleitvorgang zwischen den Dichtungsanordnungen 22, 84 und dem zugeordneten Gleitpartner erleichtert.

### Bezugszeichenliste

- 1: Betriebsbrems- und Federspeicherbremszylinder
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Federspeicherbremskolbenstange
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Zentrierring
- 42: radial innere Umfangsfläche
- 44: Wandung
- 46: Zylinderachse
- 48: Rand
- 50: Führungsring
- 52: Dichtungselement
- 54: Durchbruch
- 56: Führungsabschnitt
- 58: Wandung
- 60: Ausnehmung
- 62: Ausnehmung
- 64: Halteabschnitt
- 66: Halteabschnitt
- 68: Mittelebene
- 72: Dichtungsabschnitt
- 74: Dichtungsabschnitt
- 76: Schenkel
- 78: Schenkel
- 80: Vorsprung
- 82: Ausnehmung
- 84: Dichtungsanordnung
- 86: Federtopf
- 88: Dichtungselement
- 90: Führungsring
- 92: Ausnehmung
- 94: Ausnehmung
- 96: Durchbruch
- 98: Halteabschnitt
- 100: Halteabschnitt
- 102: Dichtungsabschnitt
- 104: Schenkel
- 106: Schenkel
- 108: Schulter
- 110: Vorsprung
- 112: Ausnehmung

## Patentansprüche

1. Kombinierter Betriebsbrems- und Federspeicherbremszylinder (1) für Bremsanlagen von Fahrzeugen, mit einem im Gehäuse des Betriebsbremszylinders (2) angeordneten Betriebsbremskolben (26) sowie mit einem im Gehäuse des Federspeicherbremszylinders (4) angeordneten, durch wenigstens eine Speicherfeder (10) betätigbaren Federspeicherbremskolben (8) mit einer Federspeicherbremskolbenstange (18), welche durch eine zentrale Bohrung (21) einer Zwischenwand (6) zwischen dem Betriebsbremszylinder (2) und dem Federspeicherbremszylinder (4) derart ragt, dass sie auf den Betriebsbremskolben (26) wirkt, wobei in der zentralen Bohrung (21) der Zwischenwand (6) eine Dichtungsanordnung (22) aufgenommen ist, welche das Innere des Betriebsbremszylinders (2) gegenüber dem Inneren des Federspeicherbremszylinders (4) abdichtet und wobei der Federspeicherbremskolben (8) an seiner radial äußeren Umfangsfläche eine weitere Dichtungsanordnung (84) trägt, zur Abdichtung einer die Speicherfeder (10) beinhaltenden Federkammer (14) von einer be- und entlüftbaren Federspeicherbremskammer (12) des Federspeicherbremszylinders (4), **dadurch gekennzeichnet, dass** wenigstens eine der Dichtungsanordnungen (22; 84) einen die Federspeicherbremskolbenstange (18) in der Bohrung (21) der Zwischenwand (6) oder den Federspeicherbremskolben (8) im Federspeicherbremszylinder (4) führenden Führungsring (50; 90) aus einem gegenüber dem Material wenigstens eines Dichtungselements (52; 88) steiferen Material beinhaltet, wobei das Dichtungselement (52; 88) aus einem mit dem Führungsring (50; 90) durch Urformen wie Spritzgießen oder Spritzpressen verbundenen Elastomer besteht.

2. Kombinierter Betriebsbrems- und Federspeicherbremszylinder nach Anspruch 1, **dadurch gekennzeichnet, dass** der Führungsring (50; 90) aus einem Kunststoff wie aus Acetal besteht.

3. Kombinierter Betriebsbrems- und Federspeicherbremszylinder nach Anspruch 1 oder 2, **dadurch gekennzeichnet, dass** der Führungsring (50; 90) wenigstens eine Ausnehmung (60, 62; 92, 94) mit hinterschnittenem Querschnitt aufweist, welche das wenigstens eine Dichtungselement (52; 88) in hintergreifender Weise durchragt.

4. Kombinierter Betriebsbrems- und Federspeicherbremszylinder nach Anspruch 3, **dadurch gekennzeichnet, dass** die Ausnehmung (60, 62; 92, 94) am Führungsring (50; 90) stimseitig angeordnet ist und sich in axialer Richtung erstreckt.

5. Kombinierter Betriebsbrems- und Federspeicherbremszylinder nach Anspruch 4, **dadurch gekennzeichnet, dass** das wenigstens eine Dichtungselement (52; 88) mit wenigstens einem Halteabschnitt (64, 66; 98, 100) in der wenigstens einen Ausnehmung (60, 62; 92, 94) des Führungsrings (50; 90) gehalten ist und wenigstens ein Dichtungsabschnitt (72, 74; 102) des Dichtungselements (52; 88) über den Führungsring (50; 90) axial hinaus ragt.

6. Kombinierter Betriebsbrems- und Federspeicherbremszylinder nach Anspruch 5, **dadurch gekennzeichnet, dass** die Halteabschnitte (64, 66; 98, 100) des Dichtungselements (52; 88) durch wenigstens einen axialen Durchbruch (54; 96) des Führungsrings (50; 90) miteinander in Verbindung stehen.

7. Kombinierter Betriebsbrems- und Federspeicherbremszylinder nach Anspruch 6, **dadurch gekennzeichnet, dass** der wenigstens eine Dichtungsabschnitt (72, 74; 102) des Dichtungselements (52; 88) an seinem vom Führungsring (50; 90) weg weisenden Ende einen schwalbenschwanzförmigen Querschnitt mit zwei Schenkeln (76, 78; 104, 106) aufweist, wobei der eine Schenkel (78; 104) gegen die radial innere Wandung (58) der zentralen Bohrung (21) der Zwischenwand (6) oder gegen den Federspeicherbremszylinder (4) und der andere Schenkel (76; 106) gegen die Federspeicherbremskolbenstange (18) oder gegen den Federspeicherbremskolben (8) dichtet.

8. Kombinierter Betriebsbrems- und Federspeicherbremszylinder nach Anspruch 6 oder 7, **dadurch gekennzeichnet, dass** das wenigstens eine Dichtungselement (52) bezüglich des Führungsrings (50) symmetrisch ausgebildet ist und zwei jeweils axial über den Führungsring (50) hinaus ragende Dichtungsabschnitte (72, 74) aufweist.

9. Kombinierter Betriebsbrems- und Federspeicherbremszylinder nach einem der vorhergehenden Ansprüche, **dadurch gekennzeichnet, dass** der Führungsring (50; 90) in radialer Richtung derart elastisch ausgebildet ist, dass wenigstens ein radial vorstehender Vorsprung (80; 110) des Führungsrings (50; 90) mit einer Ausnehmung (82; 112) in der radial inneren Wandung (58) der zentralen Bohrung (21) der Zwischenwand (6) oder in der radial äußeren Umfangsfläche des Federspeicherbremskolbens (8) verrastbar ist.

10. Kombinierter Betriebsbrems- und Federspeicherbremszylinder nach einem der vorhergehenden Ansprüche, **dadurch gekennzeichnet, dass** zwischen dem Führungsring (50; 90) und dem wenigstens einen Dichtungselement (52; 88) zur Aufnahme von Schmierstoff wenigstens eine Kavität ausgebildet ist.

## Claims

1. A combined service-brake and spring-loaded brake cylinder (1) for braking systems of vehicles, with a service-brake piston (26) which is arranged in the housing of the service-brake cylinder (2), and also with a spring-loaded brake piston (8), with a spring-loaded brake piston rod (18), which is arranged in the housing of the spring-loaded brake cylinder (4) and which can be actuated by at least one spring-type actuator (10), which rod protrudes through a central bore (21) in a partition (6) between the service-brake cylinder (2) and the spring-loaded brake cylinder (4) such that it acts on the service-brake piston (26), with a seal arrangement (22) being received in the central bore (21) of the partition (6), which arrangement seals off the interior of the service-brake cylinder (2) from the interior of the spring-loaded brake cylinder (4), and the spring-loaded brake piston (8) bearing on its radially outer peripheral surface a further seal arrangement (84), for sealing off a spring chamber (14) containing the spring-type actuator (10) from a spring-loaded brake chamber (12) of the spring-loaded brake cylinder (4) to which air can be admitted and from which it can be released, **characterised in that** at least one of the seal arrangements (22; 84) contains a guide ring (50; 90), made from a material which is more rigid than the material of at least one sealing element (52; 88), which guides the spring-loaded brake piston rod (18) in the bore (21) in the partition (6) or the spring-loaded brake piston (8) in the spring-loaded brake cylinder (4), the sealing element (52; 88) consisting of an elastomer which is connected to the guide ring (50; 90) by primary forming such as injection-moulding or transfer moulding.

2. A combined service-brake and spring-loaded brake cylinder according to Claim 1, **characterised in that** the guide ring (50; 90) consists of a plastics material such as acetal.

3. A combined service-brake and spring-loaded brake cylinder according to Claim 1 or 2, **characterised in that** the guide ring (50; 90) has at least one cutout (60, 62; 92, 94) with an undercut cross-section through which the at least one sealing element (52; 88) penetrates in a manner so as to engage behind.

4. A combined service-brake and spring-loaded brake cylinder according to Claim 3, **characterised in that** the cutout (60, 62; 92, 94) is arranged on the end face on the guide ring (50; 90) and extends in the axial direction.

5. A combined service-brake and spring-loaded brake cylinder according to Claim 4, **characterised in that** the at least one sealing element (52; 88) is held with at least one holding section (64, 66; 98, 100) in the at least one cutout (60, 62; 92, 94) of the guide ring (50; 90) and at least one sealing section (72, 74; 102) of the sealing element (52; 88) protrudes axially beyond the guide ring (50; 90).

6. A combined service-brake and spring-loaded brake cylinder according to Claim 5, **characterised in that** the holding sections (64, 66; 98, 100) of the sealing element (52; 88) are connected together by at least one axial penetration (54; 96) in the guide ring (50; 90).

7. A combined service-brake and spring-loaded brake cylinder according to Claim 6, **characterised in that** the at least one sealing section (72, 74; 102) of the sealing element (52; 88), at its end pointing away from the guide ring (50; 90), has a dovetailed cross-section with two arms (76, 78; 104, 106), the one arm (78; 104) sealing off from the radially inner wall (58) of the central bore (21) of the partition (6) or from the spring-loaded brake cylinder (4), and the other arm (76; 106) sealing off from the spring-loaded brake piston rod (18) or from the spring-loaded brake piston (8).

8. A combined service-brake and spring-loaded brake cylinder according to Claim 6 or 7, **characterised in that** the at least one sealing element (52) is formed symmetrically with respect to the guide ring (50) and has two sealing sections (72, 74) which in each case extend axially beyond the guide ring (50).

9. A combined service-brake and spring-loaded brake cylinder according to one of the preceding claims, **characterised in that** the guide ring (50; 90) is formed elastically in the radial direction such that at least one radially protruding projection (80; 110) of the guide ring (50: 90) can be latched with a cutout (82: 1121 in the radially inner wall (58) of the central bore (21) of the partition (6) or in the radially outer peripheral surface of the spring-loaded brake piston (8).

10. A combined service-brake and spring-loaded brake cylinder according to one of the preceding claims, **characterised in that** at least one cavity is formed between the guide ring (50; 90) and the at least one sealing element (52; 88) for receiving lubricant.

## Revendications

1. Cylindre (1) combiné de frein de service et de frein à ressort accumulateur pour des installations de freinage de véhicule, comprenant un piston (26) de frein de service disposé dans l'enveloppe du cylindre (2) du frein de service, ainsi qu'un piston (8) de frein à ressort accumulateur, qui est disposé dans l'enveloppe du cylindre (4) du frein à ressort accumulateur, qui peut être actionné par au moins un ressort (10) accumulateur et qui a une tige (8) de piston de frein à ressort accumulateur, laquelle pénètre dans un trou (21) central d'une paroi (6) intermédiaire comprise entre le cylindre (2) du frein de service et le cylindre (4) de frein à ressort accumulateur de manière à agir sur le piston (26) du frein de service, dans lequel dans le trou (21) central de la paroi (6) intermédiaire est logé un agencement (22) d'étanchéité, qui rend l'intérieur du cylindre (2) du frein de service étanche par rapport à l'intérieur du cylindre (4) du frein à ressort accumulateur et dans lequel le piston (8) du frein à ressort accumulateur porte sur sa surface périphérique extérieure radialement un autre agencement (64) d'étanchéité pour rendre étanche une chambre (14) de ressort contenant le ressort (10) accumulateur par rapport à une chambre (12) du frein à ressort accumulateur, pouvant être alimentée en air et vidée d'air, du cylindre (4) du frein à ressort accumulateur, **caractérisé en ce qu'**au moins l'un des agencements (22 ; 84) d'étanchéité comporte une bague (50 ; 90) de guidage, guidant la tige (18) du piston du frein à ressort accumulateur dans le trou (21) de la paroi (6) intermédiaire ou le piston (8) du frein à ressort accumulateur dans le cylindre (4) du frein à ressort accumulateur et en un matériau plus rigide que le matériau d'au moins un élément (52 ; 88) d'étanchéité, l'élément (52 ; 88) d'étanchéité étant en un élastomère relié à la bague (50 ; 90) de guidage par transformation première, comme par moulage par injection ou par moulage par transfert.

2. Cylindre combiné de frein de service et de frein à ressort accumulateur suivant la revendication 1, **caractérisé en ce que** la bague (50 ; 90) de guidage est en une matière plastique, comme en acétal.

3. Cylindre combiné de frein de service et de frein à ressort accumulateur suivant la revendication 1 ou 2, **caractérisé en ce que** la bague (50 ; 90) de guidage comporte au moins un évidement (60, 62 ; 92, 94) de section transversale en contre-dépouille qui traverse le au moins un élément (52; 88) d'étanchéité en s'accrochant derrière.

4. Cylindre combiné de frein de service et de frein à ressort accumulateur suivant la revendication 3, **caractérisé en ce que** l'évidement (60, 62 ; 92, 94) est disposé du côté frontal sur la bague (50 ; 90) de guidage et s'étend dans la direction axiale.

5. Cylindre combiné de frein de service et de frein à ressort accumulateur suivant la revendication 4, **caractérisé en ce que** le au moins un élément (52 ;88) d'étanchéité est maintenu par au moins un tronçon (64, 66 ; 98, 100) de maintien dans le au moins un évidement (60, 62 ; 92, 94) de la bague (50 ; 90) de guidage et au moins un tronçon (72, 74 ; 102) d'étanchéité de l'élément (52 ; 88) d'étanchéité dépasse axialement de la bague (50 ; 90) de guidage.

6. Cylindre combiné de frein de service et de frein à ressort accumulateur suivant la revendication 5, **caractérisé en ce que** les tronçons (64, 66 ; 98, 100) de maintien de l'élément (52 ; 88) d'étanchéité sont en liaison entre eux par au moins une traversée (54 ; 96) axiale de la bague (50 ; 90) de guidage.

7. Cylindre combiné de frein de service et de frein à ressort accumulateur suivant la revendication 6, **caractérisé en ce que** le au moins un tronçon (72, 74 ; 102) d'étanchéité de l'élément (52 ; 88) d'étanchéité a, à son extrémité éloignée de la bague (50 ; 90) de guidage, une section transversale en queue d'aronde ayant deux branches (76, 78 ; 104, 106), l'une des branches (78 ; 104) s'appuyant de manière étanche sur la surface (58) intérieure radialement du trou (21) centrale de la paroi (6) intermédiaire ou sur le cylindre (4) du frein à ressort accumulateur et l'autre branche (76 ; 106) sur la tige (18) du piston du frein à ressort accumulateur ou sur la tige (8) du frein à ressort accumulateur.

8. Cylindre combiné de frein de service et de frein à ressort accumulateur suivant la revendication 6 ou 8, **caractérisé en ce que** le au moins un élément (52) d'étanchéité est symétrique par rapport à la bague (50) de guidage et a deux tronçons (72, 74) d'étanchéité dépassant axialement respectivement de la bague (50) d'étanchéité.

9. Cylindre combiné de frein de service et de frein à ressort accumulateur suivant l'une des revendications précédentes, **caractérisé en ce que** la bague (50 ; 90) de guidage est constituée élastiquement dans la direction radiale de manière à ce qu'au moins une saillie (80 ; 110) faisant saillie radialement de la bague (50 ; 90) de guidage puisse s'encliqueter avec un évidement (82 ; 102) dans la surface (58) intérieur radialement du trou (21) central de la paroi (6) intermédiaire ou dans la surface périphérique extérieure radialement du piston (8) du frein à ressort accumulateur.

10. Cylindre combiné de frein de service et de frein à ressort accumulateur suivant l'une des revendications précédentes, **caractérisé en ce qu'**au moins une cavité est formée pour la réception d'agent lubrifiant entre la bague (50 ; 90) de guidage et le au moins un élément (52 ; 88) d'étanchéité.
